# EUROPÄISCHE PATENTSCHRIFT

(11) **EP 0 910 718 B1**
(45) Veröffentlichungstag und Bekanntmachung des Hinweises auf die Patenterteilung: **19.03.2003**
(21) Anmeldenummer: 97934419.9
(22) Anmeldetag: 09.07.1997
(51) Int. Cl.: E05F 15/16

(54) **VERFAHREN ZUR BEGRENZUNG DER ÜBERSCHUSSKRAFT EINES ELEKTRISCH GESTEUERTEN, FREMDKRAFTBETÄTIGTEN AGGREGATS BEIM ANFAHREN SEINER OBEREN ODER UNTEREN ANSCHLAGPOSITION, INSBESONDERE BEIM ANFAHREN DER SCHLIESSPOSITION EINES FENSTERHEBERS EINES KRAFTFAHRZEUGS**
PROCESS FOR LIMITING THE EXCESS FORCE OF AN ELECTRICALLY CONTROLLED AGGREGATE ACTUATED BY AN EXTERNAL FORCE WHEN IT NEARS ITS TOP OR BOTTOM STOP POSITIONS, IN PARTICULAR FOR A MOTOR VEHICLE WINDOW LIFTER NEARING ITS CLOSURE POSITION
PROCEDE POUR LIMITER LA FORCE EXCESSIVE D'UN ENSEMBLE ENTRAINE PAR UN MOTEUR ELECTRIQUE ET ACTIONNE PAR UNE FORCE EXTERIEURE LORSQU'IL S'APPROCHE DE SES POSITIONS LIMITES SUPERIEURE OU INFERIEURE, NOTAMMENT DE LA POSITION DE FERMETURE DU LEVE-VITRE D'UN VEHICULE A MOTEUR

(30) Priorität: 12.07.1996 DE 19628203
(43) Veröffentlichungstag der Anmeldung: 28.04.1999
(73) Patentinhaber: Brose Fahrzeugteile GmbH & Co. KG, 96450 Coburg (DE)
(72) Erfinder: SEEBERGER, Jürgen, D-96148 Baunach (DE); ÜBELEIN, Jörg, D-96271 Grub (DE)
(74) Vertreter: Müller, Wolfram Hubertus, Dipl.-Phys.
(86) Internationale Anmeldenummer: DE9701477
(87) Internationale Veröffentlichungsnummer: WO98002631

(56) Entgegenhaltungen:
- EP-A- 0 468 361
- GB-A- 2 026 723
- GB-A- 2 271 863

## Beschreibung

Die Erfindung betrifft ein Verfahren zur Begrenzung der Überschußkraft eines elektrisch gesteuerten, fremdkraftbetätigten Aggregats beim Anfahren seiner oberen oder unteren Anschlagposition, insbesondere beim Anfahren der Schließposition eines Fensterhebers eines Kraftfahrzeugs, gemäß Patentanspruch 1. Das Verfahren zeichnet sich aus durch eine hohe automatische Anpassungfähigkeit an die stark schwankenden äußeren Bedingungen (zum Beispiel: Temperatur, Feuchtigkeit), denen ein Fensterheber unterworfen ist, sowie den Ausgleich von systembedingten Schwankungen (zum Beispiel: Streuung des maximalen Motordrehmoments eines Elektromotors).

Aus DE 30 34 118 C2 ist ein Verfahren zur elektronischen Überwachung des Öffnungs- und Schließvorganges von elektrisch betriebenen Aggregaten, wie zum Beispiel Fensterhebern und Schiebedächern in Kraftfahrzeugen bekannt, wobei charakteristische Größen des Aggregats erfaßt und in einem Mikrocomputer ausgewertet werden, um schließlich Stellsignale für das elektrische Stellorgan des Aggregats zu generieren. Ziel dieses Verfahrens ist es, trotz des automatischen Öffnens und Schließens einer Kraftfahrzeugfensterscheibe ein gefährliches Einklemmen von Körperteilen und Gegenständen sicher auszuschließen.

Zu diesem Zweck ist der Öffnungs- und Schließvorgang in drei Bereiche unterteilt. Um das vollständige Schließen der Fensterscheibe zu ermöglichen, war es notwendig, das System zur Erkennung eines Einklemmzustandes abzuschalten, noch bevor die Scheibenoberkante den Dichtungsbereich erreichen konnte. Anderenfalls wäre es zum Reversieren der Fensterscheibe gekommen. Das Stellorgan wird also erst abgeschaltet, wenn die Sensorik/Elektronik einen Blockierzustand des Aggregats für eine vorgegebene Zeitdauer erkannt hat.

Dadurch, daß der Elektromotor sein maximales Drehmoment entwickeln kann, wird die Fensterscheibe mit der größten zur Verfügung stehenden Kraft in die Dichtung gepreßt. Zum Teil erreichen die Überschußkräfte sehr hohe Wert, da der Antrieb entsprechend der ungünstigsten zur erwartenden Bedingungen ausgelegt werden muß. Infolge dessen treten Verspannungen in der Tür auf, die Ursache für Windgeräusche und sogar Undichtheiten sein können. Auch ein erhöhter Verschleiß der Fensterhebermechanik ist zu beklagen. Darüber hinaus führt die notwendigerweise sehr stabile Ausbildung der mechanischen belastenden Teile zu einem Mehraufwand an Material und Gewicht.

Der Erfindung liegt deshalb die Aufgabe zugrunde, ein Verfahren zur Begrenzung der Überschußkraft eines elektrisch gesteuerten, fremdkraftbetätigten Aggregats beim Anfahren seiner oberen oder unteren Anschlagposition, insbesondere beim Anfahren der Schließposition eines Fensterhebers eines Kraftfahrzeugs, zu entwickeln, das mit einfachen, kostengünstigen Mitteln das Auftreten unnötig großer Überschußkräfte verhindert und gleichzeitig das Erreichen der Anschlagposition, insbesondere der Schließposition, auch dann sicher gewährleistet, wenn die Ausgangsbedingungen, wie zum Beispiel Spannung der Energiequelle, große Fertigungstoleranzen des Verstellsystems und Klimafaktoren, stark schwanken.

Die Aufgabe wird durch die kennzeichnenden Merkmale des Patentanspruchs 1 gelöst. Die Unteransprüche geben vorteilhafte Ausführungen der Erfindung an.

Demnach wird im Einlaufbereich der Anschlagpositionen wenigstens ein Meßwert ermittelt, der mit der Verstellkraft des Aggregats korreliert ist. Dieser Meßwert wird durch die Elektronikeinheit um einen vorgegebenen Betrag (zum Beispiel Relativbetrag oder durch einen funktionellen Zusammenhang berechneter Betrag) erhöht und als Abschaltkriterium definiert, so daß bei seiner Überschreitung bzw. Unterschreitung der Antrieb abgeschaltet wird.

Als Einlaufbereich gilt ein Verstellbereich des Aggregats, der entweder noch vor dem Erreichen der Anschlagposition beginnt und nach einem darauf folgenden Verstellweg endet, oder der erst bei Erreichen der Anschlagposition beginnt und nach einem weiteren eine elastische Deformation wenigstens eines Teils des Verstellsystems bewirkenden Verstellweg endet. Die vorteilhafteste Ausführung kann nur unter Berücksichtigung der konkreten Bedingungen des Einzelfalls ermittelt werden. Um welchen Betrag, insbesondere Relativbetrag, der Meßwert zum sicheren Erreichen der Anschlagpositionen zu erhöhen ist, wird am einfachsten empirisch ermittelt.

Bezogen auf eine Fensterscheibe eines Kraftfahrzeugs heißt dies: Es wird ein Kennfeld von Meßwerten bei Variation der wichtigsten, sich auf die Scheibenbewegung beim Schließvorgang bzw. beim Anfahren der unteren Anschlagposition der Fensterscheibe auswirkenden Meßgrößen aufgenommen. Solche Einflußgrößen sind unter anderem Temperatur, Feuchtigkeit, Eis und einige für den Scheibenlauf wichtige geometrische Toleranzen. Aus diesem Kennfeld sollte man den Fall auswählen, bei dem der zu erwartende Drehmomentbedarf zum sicheren Anfahren der Anschlagposition, insbesondere der Schließposition der Fensterscheibe, im Vergleich zum zur Verfügung stehenden Drehmoment des Motors am weitesten ausgeschöpft ist. Aus den mit diesen beiden Drehmomentwerten korrelierten Meßwerten (z.B. Strom, Periodendauer) kann ein Faktor zur Generierung des Abschaltkriteriums gewonnen werden. Wendet man den so gewonnenen Faktor zur Generierung des Abschaltkriteriums stets auf den im Einlaufbereich der oberen bzw. unteren Anschlagposition an, so wird die Fensterscheibe stets vollständig geschlossen bzw. vollständig geöffnet.

Natürlich kann man einen höheren Anpaßungsgrad des Verfahrens an die jeweils herrschenden Bedingungen erhalten, wenn das durch Messungen erstellte Kennfeld in Form einer Werttabelle oder auch in Form mathematisch funktioneller Zusammenhänge in der Mikroelektronik zur Verfügung gestellt wird.

Gemäß einer weiteren Erfindungsvariante ist vorgesehen, daß Abschaltkriterium zu generieren auf der Basis eines mit der Verstellkraft korrelierten Meßwertes vor der ersten Berührung zwischen Dichtung und Scheibenoberkante und eines Meßwerts, der unmittelbar nach dem Einlauf der Scheibenoberkante in die Dichtung ermittelt wurde. Dabei sollte der Dichtungsbereich nicht mehr als 50% durchfahren sein. In jedem Fall ist sicherzustellen, daß die Signalauswertung und Generierung des Abschaltkriteriums hinreichend schnell erfolgen. Der Vorteil der soeben beschriebenen Variante besteht darin, daß in die Berechnung sowohl die Gleiteigenschaften der Fensterscheibe als auch die Dichtungseigenschaften eingehen.

Falls das Durchqueren des Dichtungsbereichs ausreichend Zeit für mehrere Messungen innerhalb der Dichtungen bietet, so kann dadurch auch auf sich ändernde Bedingungen innerhalb der Dichtung eingegangen werden.

Besonders vorteilhaft anwendbar ist die Erfindung auf elektrisch gesteuerte Fensterheber mit Einklemmschutzerkennung, weil hier bereits sämtliche Voraussetzungen für die Signalerfassung und Signalauswertung gegeben sind. Bei Verwendung eines elekromotorischen Antriebs kann zum Beispiel mittels eines Hallsensors in einfacher Weise die Periodendauer als Korrelationsgröße für die Verstellkraft verwendet werden, da das Motorkennfeld einen eindeutigen Zusammenhang zwischen der Drehzahl und dem Drehmoment aufweist. Ebenso könnten Meßwerte des elektrischen Stroms diesen Zweck erfüllen.

Analog zur voranbeschriebenen Erfindungsvariante zum Schließen der Fensterscheibe kann das Verfahren auch zum Anfahren des unteren Anschlags angewandt werden. Dazu sind Mittel vorzusehen, die mit der Fensterscheibe noch vor dem Erreichen der Anschlagposition in Kontakt treten und eine Verringerung der Motordrehzahl - und somit eine Erhöhung der Periodendauer - bewirken. In einfacher Weise lassen sich solche Mittel zur Erzeugung lokaler Schwergängigkeiten als Federelemente oder elastische Dämpfungselemente ausbilden. Im zuletzt genannten Fall (elastischer Dämpfungselemente) beginnt der Einlaufbereich also erst mit Berührung des Dämpfungselements und endet nach einem weiteren Verstellweg des Verstellsystems, der eine elastische Deformation des Dämpfungselements bewirkt.

An dieser Stelle sei jedoch darauf hingewiesen, daß die Eigenelastizität mancher Verstellsysteme, insbesondere von Armfensterhebern, so groß ist, daß zum Anfahren von Anschlagpositionen keine zusätzlichen Dämpfungselemente eingesetzt werden müssen. Der Einlaufbereich beginnt hierbei mit dem Erreichen des Anschlags und endet nach einem weiteren Verstellweg des Verstellsystems, der eine elastische Deformation des Verstellsystems bewirkt.

Durch das erfindungsgemäße Verfahren wird sichergestellt, daß jeweils die in der Summe herrschenden Bedingungen in ihren Auswirkungen beim Anfahren der Anschlagpositionen derart Berücksichtigung finden, daß die Verstellkraft in gerade ausreichener Größe zur Verfügung gestellt wird. Hierdurch werden unerwünschte Überschußkräfte minimiert.

Angesichts der Möglichkeit des Auftretens von Unterschieden von zum Teil erheblich mehr als 100% bezüglich der verfügbaren Verstellkraft im Vergleich zweier Verstellsysteme gleichen Typs, ergeben sich aus der erfindungsgemäßen Überschußkraftbegrenzung offensichtlich auch Möglichkeiten für konstruktive Verbesserungen, die beispielsweise auf Gewichtsersparnis gerichtet sein können.

Die Erfindung wird anhand eines Ausführungsbeispiels für einen Fensterheber und der Zeichnungen näher erläutert. Es zeigen:
- Figur 1: Schnittdarstellung einer Fensterscheibe eines Kraftfahrzeugs mit einer Dichtung für die Scheibenoberkante;
- Figur 2: Schematische Darstellung der Änderung der auf die Fensterscheibe wirkenden Kraft in Abhängigkeit ihrer Position;
- Figur 3: Schnittdarstellung einer Fensterscheibe eines Kraftfahrzeugs mit einer Führungsschiene und einem unteren Anschlag mit seitlich angeodnetem Reibelement;
- Figur 4: Schnittdarstellung einer Fensterscheibe eines Kraftfahrzeugs mit einer Führungsschiene und einem unteren Anschlag aus elastischem Material mit relativ großer (elastischer) Deformierbarkeit.

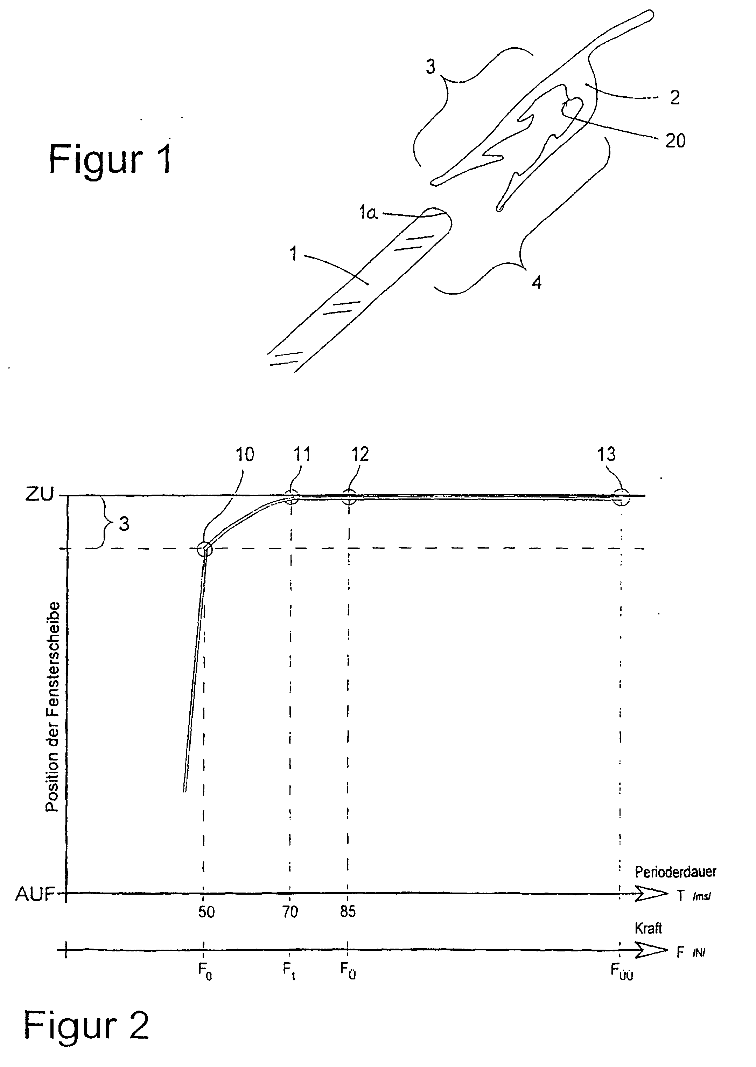

Die schematische Darstellung von Figur 1 soll insbesondere die Begriffsinhalte bezüglich des Dichtungsbereichs/Schließbereichs 3 und des Dichtungseinlaufbereichs 4 veranschaulichen. Gemäß dieser Darstellung befindet sich die Fensterscheibe 1 mit ihrer Schließkante unmittelbar am Beginn des Dichtungsbereichs 3, jedoch ohne die Dichtung 2 bereits berührt zu haben. Der erfindungsgemäße Dichtungseinlauf 4, in dem wenigstens ein mit der Verstellkraft der Fensterscheibe korrelierter Meßwert ermittelt wird, beginnt etwa in einem Abstand von der Dichtung 2, der circa 25% bis 50% der Ausdehnung des Dichtungsbereichs 3 entspricht, und endet in Höhe des mechanischen Anschlags 20.

Wenn die Schließkante der Fensterscheibe 1 den inneren Anschlag 20 der Dichtung 2 erreicht, gilt der Schließvorgang grundsätzlich als abgeschlossen. Im allgemeinen ist es jedoch vorteilhaft, den elektromotorischen Antrieb noch etwas weiter zu betrieben, um das Verstellsystem geringfügig zu verspannen. Dies bringt eine zusätzliche Sicherheit für das korrekte und dauerhafte Erreichen der angesteuerten Anschlagposition. Beschleunigungen entlang der Verstellachse können dann nicht zu Relativbewegungen des Verstellobjekts und den damit verbundenen Geräuschen führen. Unnötig große Verspannungen des Systems sind durch eine geeignete Auswahl/Festlegung/Berechnung des Betrags des Abschaltkriteriums zu vermeiden.

Anhand der schematischen Darstellung von Figur 2 soll ein Ausführungsbeispiel des Erfindungsprinzips näher erläutert werden. Auf der Absisse sind die Periodendauer T (in Millisekunden) der Antriebswelle beziehungsweise die Verstellkraft F (in Newton) aufgetragen. Die Ordinate gibt die Position der Fensterscheibe (1) zwischen dem völlig geöffneten Zustand AUF und dem völligen Zustand ZU an, dem der Dichtungsbereich 3 vorgelagert ist.

Die dargestellte Kurve zeigt den prinzipiellen Verlauf der Verschiebekraft F und der Periodendauer T während des Verschiebevorgangs der Fensterscheibe 1. Im allgemeinen steigen die Verschiebekräfte aufgrund leicht zunehmender Reibung in dem seitlichen Führungselementen etwas an, was zu einer entsprechenden Reduzierung der Motordrehzahl und somit zur Erhöhung der Periodendauer T führt.

Gemäß des vorliegenden Beispiels beträgt die Periodendauer bei Erreichen des Dichtungsbereichs 3 im Punkt 10 50ms. Dieser Meßwert dient als Basis zur Generierung des Abschaltkriteriums, in dem der Meßwert um einen bestimmten Betrag erhöht wird. Die Erhöhung kann nach einer der eingangs beschriebenen Methoden erfolgen, zum Beispiel durch Multiplikation mit einem Faktor aus einer Wertetabelle, die im Mikrocomputer abliegt. In diesem Fall besitzt der Erhöhungsfaktor den Wert "1,7". Somit ergibt sich für das Abschaltkriterium der Wert 50ms x 1,7 = 85 ms, das heißt, der Antrieb wird abgeschaltet sobald die Sensorik/Elektronik ein Überschreiten der Periodendauer T = 85 ms erkennt.

Im Punkt 11 erreicht die Schließkante der Fensterscheibe 1 den Anschlag 20 der Dichtung 2 mit einer Verschiebekraft F₁. Da in diesem Punkt 11 die Periodendauer mit T = 70 ms noch unterhalb des Abschaltkriteriums von T = 85 ms liegt, kommt es nun zu einem Kraftaufbau bis F = F_{Ü}. Die Überschußkraft, die sich aus der Differenz von F_{Ü} - F₁ ergibt, bleibt jedoch sehr gering, da schon kurz nach dem Erreichen der Schließposition der Antrieb stillgesetzt wird.

Ohne die erfindungsgemäße Überschußkraftbegrenzung würde der Motor die Verschiebekraft F bis zum Punkt 13 mit einer Kraft F_{ÜÜ} steigern, wenn man annimmt, daß der Motor sein maximales Drehmoment in diesem Punkt 13 erreicht hat. Die Überschußkraft ergibt sich als Differenz von FÜÜ - F₁ . Sie beträgt ein Vielfaches der erfindungsgemäß begrenzten Überschußkraft.

In Analogie zum Anfahren der beschriebenen Schließposition eignet sich das Verfahren auch zum Anfahren der Position des Aggregats (z.B. Fensterheber, Schiebedach), in der die größtmögliche Öffnung erreicht wird. Dies geschieht beim Erreichen der unteren Anschlagposition.

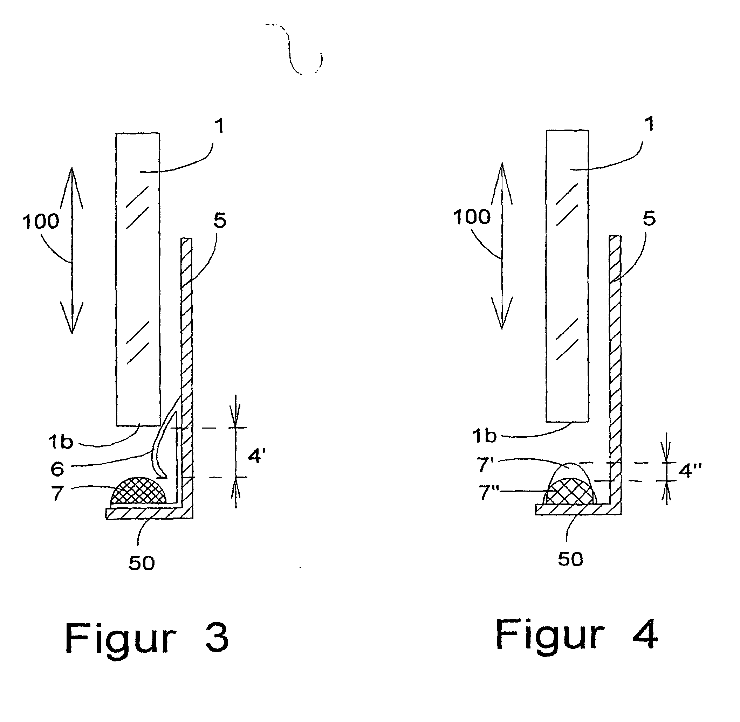

Figur 3 zeigt in stark vereinfachter schematischer Darstellung den Ausschnitt einer Führungsschiene 5 eines Seilfensterhebers, entlang welcher eine Fensterscheibe 1 verschiebbar geführt ist. Eine winklige Umstellung der Führungsschiene 5 bildet den Anschlag 50, dem ein Reibelement in Form einer Feder 6 und ein elastisches Dämpfungselement 7, z.B. aus Gummi, zugeordnet sind. Beim Anfahren des unteren Anschlags 50 trifft die Scheibenunterkante 1b zunächst auf die Feder 6, die dem nach der Verstellachse 100 ausgerichteten Anschlag 5 sowie dem Dämpfungselement 7 vorgelagert ist und sich am seitlichen Schenkel der Führungsschiene 5 abstützt.

Der dem Einlaufbereich 4 gemäß Figur 1 (zum Anfahren der Schließposition einer Fensterscheibe) analoge Einlaufbereich 4' ist für das Ausführungsbeispiel von Figur 3 derart definiert, daß er mit der ersten Berührung der Scheibenunterkante 1b mit der Feder 6 beginnt und mit der Berührung des Dämpfungselements 7 endet. Die Feder 6 bewirkt eine plötzliche und leicht sensierbare Schwergängigkeit der Fensterscheibe 1. Natürlich kann der Einlaufbereich 4' auch noch etwas nach oben ausgedehnt werden, so daß sein Beginn oberhalb der Feder 6 liegt und Informationen aus diesem Verstellbereich zur Ansteuerung der unteren Anschlagposition mit herangezogen werden können.

Die Wahl eines großen Einlaufbereichs 4' ist insbesondere dann von Vorteil, wenn zur Generierung eines Meßsignals zur Generierung des Abschaltkriteriums ein vergleichsweise langer Verstellweg zurückgelegt werden muß und/oder nach dem Abschaltbefehl für den Antrieb noch ein so starkes Nachlaufen des Aggregats zu erwarten ist, daß eine hinreichende Begrenzung der Überschußkraft nicht sicher gewährleistet werden kann.

Figur 4 zeigt ein - im Vergleich zu Figur 3 - leicht abgewandeltes Ausführungsbeispiel, das mit einem sehr kleinen Einlaufbereich 4'' auskommt. Der Einlaufbereich 4'' wird von einer Deformationszone des elastischen Dämpfungselements gebildet, wobei der nichtdeformierte Zustand vom Dämpfungselement 7' und der deformierte Zustand vom Dämpfungselement 7'' gezeigt wird. Derart kurze Einlaufbereiche 4" sind problemlos anwendbar, wenn eine vergleichsweise dichte Signalfolge auf dem Verstellweg generiert wird und/oder eine hohe Eigenelastizität des Verstellsystems vorliegt.

An dieser Stelle sei darauf hingewiesen, daß die beschriebenen Federn und Dämpfungselemente auch im Bereich der Scheibenunterkante 1b befestigt oder am (nicht dargestellten) Mitnehmer für die Fensterscheibe 1 angeordnet sein können.

### Bezugszeichenliste

- 1: Fensterscheibe
- 1a: Scheibenoberkante
- 1b: Scheibenunterkante
- 2: Dichtung
- 3: Dichtungsbereich/Schließbereich
- 4: Einlaufsbereich / Dichtungseinlaufsbereich
- 4': Einlaufbereich (unterer Anschlag der Fensterscheibe)
- 4'': Einlaufbereich (unterer Anschlag der Fensterscheibe)
- 5: Führungsschiene eines Seilfensterhebers
- 6: Reibelement/Federelement
- 7: elastischer Anschlag/elastisches Dämpfungselement
- 7': elastischer Anschlag/elastisches Dämpfungselement (undeformiert)
- 7'': elastischer Anschlag/elastisches Dämpfungselement (deformiert)

- 10: Punkt/Beginn des Dichtungseinlaufs
- 11: Punkt/Ende des Dichtungsbereichs
- 12: Punkt des Abschalten des Antriebs mit Überschußkraftbegrenzung
- 13: Punkt des Abschaltens des Antriebs ohne Überschußkraftbegrenzung
- 20: Anschlag am Ende des Dichtungsbereichs
- 50: starrer Anschlag

- 100: Verstellachse der Fensterscheibe

- AUF: Fensterscheibe völlig geöffnet
- ZU: Fensterscheibe völlig geschlossen
- F₀: Kraft/Verschiebekraft im Punkt 10
- F₁: Kraft/notwendige Schließkraft
- F_{Ü}: Kraft/begrenzte Überschußkraft
- F_{ÜÜ}: Kraft/maximale/unbegrenzte Überschußkraft

## Patentansprüche

1. Verfahren zur Begrenzung der Überschußkraft eines elektonisch gesteuerten, fremdkraftbetätigten Aggregats eines Kraftfahrzeugs (z.B. eines Fensterhebers oder Schiebedachs) beim Anfahren wenigstens einer Anschlagposition, bei dem die Position des Aggregats während des Verstellvorgangs kontinuierlich ermittelt und im Einlaufbereich (4, 4', 4'') der Anschlagposition (20, 7, 7') wenigstens ein mit der Verstellkraft des Aggregats korrelierter Meßwert aufgenommen wird, und daß dieser Meßwert durch die Elektronikeinheit um einen vorgegebenen Betrag erhöht und als Abschaltkriterium definiert wird, so daß bei seiner Überschreitung bzw. Unterschreitung der Antrieb abgeschaltet wird.

2. Verfahren nach Anspruch 1, **dadurch gekennzeichnet, daß** die Anschlagposition, insbesondere der Dichtungsbereich (3), in den die Schließkante (1a) des Aggregats (1) beim Schließen einfährt, meßtechnisch ermittelt oder definiert wird.

3. Verfahren nach Anspruch 1, **dadurch gekennzeichnet, daß** als Korrelationsgröße für die Verstellkraft des Aggregats (1) der elektrische Strom, das Moment oder die Periodendauer eines Elektromotors herangezogen wird.

4. Verfahren nach Anspruch 1, **dadurch gekennzeichnet, daß** der Betrag, um den der Meßwert erhöht wird, ein Relativbetrag oder nach einem funktionellen Zusammenhang berechneter Betrag ist.

5. Verfahren nach Anspruch 4, **dadurch gekennzeichnet, daß** der Erhöhungsbetrag als prozentualer Wert auf der Basis des zuvor gemessenen Wertes der Korrelationsgröße ermittelt wird.

6. Verfahren nach einem der voranstehenden Ansprüche, **dadurch gekennzeichnet, daß** der gemessene Wert der Korrelationsgröße dem Meßwert unmittelbar vor dem Auftreffen des Aggregats (1) auf den Anschlag (20, 7, 7') entspricht.

7. Verfahren nach Anspruch 6, **dadurch gekennzeichnet, daß** der Meßwert für den Schließbereich einer verstellbaren Fensterscheibe (1) in einem Bereich ermittelt wird, der 25 % bis 50 % der Tiefe des inneren Verstellweges des Dichtungsbereichs (3) vor der Dichtung (2) liegt.

8. Verfahren nach einem der voranstehenden Ansprüche, **dadurch gekennzeichnet, daß** der gemessene Wert der Korrelationsgröße einem Meßwert entspricht, der nach dem Einlauf der Scheibenoberkante (1a) in den Dichtungsbereich (3) ermittelt wurde, wobei die Scheibenoberkante (1a) vorzugsweise höchstens die Hälfte des im Dichtungsbereich (3) liegenden Verstellweges zurückgelegt hat.

9. Verfahren nach einem der voranstehenden Ansprüche, **dadurch gekennzeichnet, daß** zunächst eine Korrelationsgröße unmittelbar vor der Dichtung (2) und anschließend eine Korrelationsgröße nach dem Einlauf der Scheibenoberkante in die Dichtung (2) gemessen wird, und daß unter Verwendung des Verhältnisses der beiden Korrelationsgrößen das Abschaltkriterium generiert wird.

10. Verfahren nach Anspruch 9, **dadurch gekennzeichnet, daß** das Verhältnis der beiden Korrelationsgrößen zur Generierung des Abschaltkriteriums auf den unmittelbar vor der Dichtung (2) gemessenen Korrelationswert bezogen wird.

11. Verfahren nach Anspruch 9, **dadurch gekennzeichnet, daß** das Verhältnis der beiden Korrelationsgrößen zur Generierung des Abschaltkriteriums auf den nach dem Einlauf der Scheibenoberkante gemessenen Korrelationswert bezogen wird.

12. Verfahren nach wenigstens einem der Ansprüche 1 bis 5, **dadurch gekennzeichnet, daß** daß der gemessene Wert der Korrelationsgröße einem Meßwert entspricht, der nach dem Auftreffen des Aggregats auf einen elastischen Anschlag (20, 7, 7') ermittelt wurde.

13. Verfahren nach einem der voranstehenden Ansprüche, **dadurch gekennzeichnet, daß** das Abschaltkriterium auf der Grundlage von wenigsten zwei nach dem Einlauf der Scheibenoberkante in den Dichtungsbereich (3) generierten Korrelationsgrößen generiert wird.

## Claims

1. Method for restricting the surplus force of an electronically controlled assembly operated by a foreign force of a motor vehicle (e.g. a window lifter or sliding roof) on hitting at least one stop position, wherein the position of the assembly is continuously detected during the displacement process and in the inlet area (4, 4', 4'') of the stop position (20, 7, 7') at least one measured value correlated with the displacement force of the assembly is recorded, and that this measured value is increased through the electronics unit by a predetermined amount and is defined as the switch-off criterion so that the drive is switched off when this criterion is exceeded or understepped.

2. Method according to claim 1 **characterised in that** the stop position , more particularly the sealing area (3) into which the closing edge (la) of the assembly (1) enters on closing, is determined or defined by technical measuring means.

3. Method according to claim 1 **characterised in that** the electric current, the moment or the period length of an electric motor is used as the correlation value for the displacement force of the assembly (1).

4. Method according to claim 1 **characterised in that** the amount by which the measured value is increased is a relative amount or an amount calculated according to a functional connection.

5. Method according to claim 4 **characterised in that** the increase amount is determined as a percentage value on the basis of the previously measured value of the correlation factor.

6. Method according to one of the preceding claims **characterised in that** the measured value of the correlation factor corresponds to the measured value immediately prior to the assembly (1) striking the stop (20, 7,7').

7. Method according to claim 6 **characterised in that** the measured value for the closing area of a displaceable window pane (1) is determined in an area which lies 25% to 50% of the depth of the inner displacement path of the sealing area (3) in front of the seal (2).

8. Method according to one of the preceding claims **characterised in that** the measured value of the correlation factor corresponds to a measured value which was determined after the entrance of the upper edge (la) of the pane into the sealing area (3) whereby the upper edge (la) of the pane has preferably covered at most half the displacement path lying in the sealing area (3).

9. Method according to one of the preceding claims **characterised in that** first a correlation factor is measured directly in front of the seal (2) and then a correlation factor is measured after the upper edge of the pane enters into the seal (2) and that the switch-off criterion is generated by using the ratio of the two correlation factors.

10. Method according to claim 9 **characterised in that** the ratio of the two correlation factors for generating the switch-off criterion is related to the correlation value measured directly in front of the seal (2).

11. Method according to claim 9 **characterised in that** the ratio of the two correlation factors for generating the switch-off criterion is related to the correlation value measured after the inlet of the upper edge of the pane.

12. Method according to at least one of claims 1 to 5 **characterised in that** the measured value of the correlation factor corresponds to a measured value which was determined after the assembly strikes an elastic stop (20, 7, 7').

13. Method according to one of the preceding claims, **characterised in that** the switch-off criterion is generated on the basis of at least two correlation factors generated after the upper edge of the pane has entered into the sealing area.

## Revendications

1. Procédé pour limiter la force excessive d'une unité dans un véhicule automobile (par exemple d'un lève-vitre ou d'un toit coulissant), commandée par voie électronique et actionnée par une force extérieure, lors de l'approche vers au moins une position de butée, dans lequel on détermine en continu la position de l'unité pendant l'opération de déplacement et on enregistre au moins une valeur de mesure corrélée avec la force de déplacement de l'unité dans la zone d'entrée (4, 4', 4") de la position de butée (20, 7, 7'), et en ce que cette valeur de mesure est augmentée d'un montant prédéterminé par l'unité électronique et définie à titre de critère de coupure, de sorte que lorsque l'on passe au-dessus ou au-dessous de celui-ci, l'entraînement est coupé.

2. Procédé selon la revendication 1, **caractérisé en ce qu'**on détermine ou on définit par métrologie la position de butée, en particulier la zone (3) du joint dans laquelle rentre l'arête d'obturation (la) de l'unité (1) lors de la fermeture.

3. Procédé selon la revendication 1, **caractérisé en ce que** l'on exploite le courant électrique, le couple ou la durée d'une période d'un moteur électrique à titre de grandeur de corrélation pour la force de déplacement de l'unité (1).

4. Procédé selon la revendication 1, **caractérisé en ce que** le montant duquel la valeur de mesure est augmentée est un montant relatif ou un montant calculé selon une relation fonctionnelle.

5. Procédé selon la revendication 4, **caractérisé en ce que** l'on détermine le montant d'augmentation sous forme d'une valeur proportionnelle en se basant sur la valeur mesurée auparavant de la grandeur de corrélation.

6. Procédé selon l'une des revendications précédentes, **caractérisé en ce que** la valeur mesurée de la grandeur de corrélation correspond à la valeur de mesure immédiatement avant que l'unité (1) rencontre la butée (20, 7, 7').

7. Procédé selon la revendication 6, **caractérisé en ce que** l'on détermine la valeur de mesure pour la zone de fermeture d'une vitre mobile (1) dans une zone qui se trouve en avant du joint (2) de 25 % à 50 % de la profondeur du trajet de déplacement à l'intérieur de la zone (3) du joint.

8. Procédé selon l'une des revendications précédentes, **caractérisé en ce que** la valeur mesurée de la grandeur de corrélation correspond à une valeur de mesure qui a été déterminée après l'entrée de l'arête supérieure (la) de la vitre dans la zone du joint, l'arête supérieure (la) de la vitre ayant parcouru de préférence au maximum la moitié du trajet de déplacement situé dans la zone (3) du joint.

9. Procédé selon l'une des revendications précédentes, **caractérisé en ce que** l'on mesure tout d'abord une grandeur de corrélation immédiatement en avant du joint (2) et ensuite une grandeur de corrélation après l'entrée de l'arête supérieure de la vitre dans le joint (2), et **en ce que** l'on génère le critère de coupure en utilisant la relation des deux grandeurs de corrélation.

10. Procédé selon la revendication 9, **caractérisé en ce que** l'on rapporte la relation des deux grandeurs de corrélation pour générer le critère de coupure à la valeur de corrélation mesurée immédiatement en avant du joint (2).

11. Procédé selon la revendication 9, **caractérisé en ce que** l'on rapporte la relation des deux grandeurs de corrélation pour générer le critère de coupure à la valeur de corrélation mesurée immédiatement après l'entrée de l'arête supérieure de la vitre.

12. Procédé selon l'une des revendications 1 à 5, **caractérisé en ce que** la valeur mesurée de la grandeur de corrélation correspond à une valeur de mesure qui a été déterminée après venue en contact de l'unité sur une butée élastique (20, 7, 7').

13. Procédé selon l'une des revendications précédentes, **caractérisé en ce que** l'on génère le critère de coupure en se basant sur au moins deux grandeurs de corrélation générées après l'entrée de l'arête supérieure de la vitre dans la zone (3) du joint.
